# EUROPÄISCHE PATENTANMELDUNG

(11) **EP 3 141 126 A1**
(43) Veröffentlichungstag der Anmeldung: **15.03.2017**
(21) Anmeldenummer: 16186598.5
(22) Anmeldetag: 31.08.2016
(51) Int. Cl.: A21C 11/02, A21C 11/10

(54) **TEIGBEARBEITUNGSANLAGE**

(30) Priorität: 09.09.2015 DE 102015217192
(71) Anmelder: WP Kemper GmbH, 33397 Rietberg (DE)
(72) Erfinder: Verfürth, Heinz, 33397 Rietberg (DE)
(74) Vertreter: Rau, Schneck & Hübner Patentanwälte Rechtsanwälte PartGmbB

(57) **Zusammenfassung**

Eine Teigbearbeitungsanlage hat einen Grundrahmen (1a) und mindestens eine angetriebene Teig-Fördereinrichtung (18) zum Fördern zu bearbeitender Teiglinge in einer Förderrichtung (9). Mindestens eine Bearbeitungseinrichtung (22) dient zur Bearbeitung der auf der Teig-Fördereinrichtung (18) geförderten Teiglinge mit einer Bearbeitungseinheit (23). Die Bearbeitungseinheit (23) ist so ausgeführt, dass sie während der Bearbeitung mit dem zu bearbeitenden Teigling relativ zum Grundrahmen (1a) in der Förderrichtung (9) angetrieben verlagert wird. Es resultiert eine Teigbearbeitungsanlage, bei der die Qualität einer Teigling-Bearbeitung auch bei hoher Förderbandgeschwindigkeit gewährleistet bleibt.

## Beschreibung

Die vorliegende Patentanmeldung nimmt die Priorität der deutschen Patentanmeldung DE 10 2015 217 192.2 in Anspruch, deren Inhalt durch Bezugnahme hierin aufgenommen wird.

Die Erfindung betrifft eine Teigbearbeitungsanlage mit einer Bearbeitungseinrichtung zur Bearbeitung von auf einem Teig-Förderband geförderten Teiglingen mit einer Bearbeitungseinheit.

Eine derartige Teigbearbeitungsanlage ist beispielsweise aus der EP 1 600 058 A2 bekannt. Die EP 1 853 117 B1 offenbart ein Verfahren zur Herstellung von geschlungenen Teigrohlingen aus Teigsträngen sowie eine Vorrichtung hierfür. Die EP 1 296 137 A2 offenbart ein Messverfahren zur Bestimmung und Überwachung der Teigqualität für eine automatische Teigbearbeitung.

Es ist eine Aufgabe der vorliegenden Erfindung, eine Teigbearbeitungsanlage derart weiterzubilden, dass die Qualität einer Teigling-Bearbeitung auch bei hoher Förderbandgeschwindigkeit gewährleistet bleibt.

Diese Aufgabe ist erfindungsgemäß gelöst durch eine Teigbearbeitungsanlage mit den in Anspruch 1 angegebenen Merkmalen.

Erfindungsgemäß wurde erkannt, dass eine während der Stüpfel-Bearbeitung mit dem zu bearbeitenden Teigling in der Förderrichtung angetriebene Bearbeitungseinheit, also eine während der Stüpfel-Bearbeitung mit dem Teigling mitfahrende Bearbeitungseinheit die Möglichkeit schafft, einen für die Stüpfel-Bearbeitung während eines Bearbeitungsvorgangs zur Verfügung stehenden Zeitraum zu verlängern. Der Stüpfelvorgang selbst kann während dieses Zeitraums stattfinden, ohne dass eine Relativbewegung des Teiglings zur Stüpfel-Bearbeitungseinheit längs der Förderrichtung stattfindet. Die Relativbewegung zwischen dem Teigling und der Stüpfel-Bearbeitungseinheit kann daher ausschließlich längs einer Stüpfelrichtung, also längs einer Bearbeitungsrichtung erfolgen, die senkrecht auf der Förderrichtung stehen kann. Auch bei höherer Fördergeschwindigkeit lässt sich im Ergebnis immer die gleiche Stüpfelgeschwindigkeit realisieren, da die mitfahrende Bearbeitungseinheit einen längeren Stüpfel-Zeitraum ermöglicht. Für eine Stüpfel-Bearbeitung, bei der sich die Stüpfel-Bearbeitungseinheit synchron zum Teigling bewegt, steht ein entsprechend verlängerter Zeitraum zur Verfügung.

Die Teig-Fördereinrichtung kann die zu bearbeitenden Teiglinge in der Fördereinrichtung mit vorgegebener, konstanter Fördergeschwindigkeit fördern. Eine Taktung einer Teigbearbeitung derart, dass die Teig-Fördereinrichtung während eines Bearbeitungstaktes zeitweilig stillsteht, kann vermieden werden. Dies erhöht den Durchsatz der Teigbearbeitungsanlage.

Unerwünschte Einflüsse aufgrund einer zu großen Relativgeschwindigkeit zwischen dem Teigling und der Bearbeitungseinheit längs der Förderrichtung während der Bearbeitung können vermieden werden. Die Fördereinrichtung kann so gestaltet sein, dass hierauf Teiglinge direkt gefördert werden. Alternativ kann die Fördereinrichtung so gestaltet werden, dass hierüber Teigling-Aufnahmen, beispielsweise Teiglingschalen, gefördert werden. Die Fördereinrichtung kann so ausgeführt sein, dass sie die Teiglinge über einen Abschnitt ihres gesamten Förderwegs fördert. Die Fördereinrichtung kann als endlos umlaufende Fördereinrichtung ausgeführt sein. Die Fördereinrichtung kann als Förderband ausgeführt sein.

Eine Ausführung nach Anspruch 2 erlaubt einen hohen Durchsatz der Teigbearbeitungsanlage.

Die Teigbearbeitungsanlage kann mehrreihig, zum Beispiel sechsreihig, achtreihig oder zehnreihig ausgeführt sein.

Zwei Antriebe nach Anspruch 3 haben sich zur Vorgabe einer Bewegungsbahn der mitfahrenden Bearbeitungseinheit als besonders geeignet herausgestellt. Beispielsweise eine Bearbeitungstiefe und eine Bearbeitungszeit können unabhängig voneinander eingestellt werden. Die Antriebe können Antriebsmotoren aufweisen, die als Servomotoren ausgeführt sind.

Ein Kurbeltrieb nach Anspruch 4 hat sich zur Vorgabe von Antriebs-Bewegungskomponenten der Bewegungsbahn der Bearbeitungseinheit als besonders geeignet herausgestellt. Es können mehrere, zum Beispiel zwei Kurbeltriebe zum Antrieb der Bearbeitungseinheit vorgesehen sein. Mindestens einer der Antriebe der Teigbearbeitungsanlage kann alternativ oder zusätzlich als Schwingantrieb ausgeführt sein.

Eine variierende Umdrehungsgeschwindigkeit nach Anspruch 5 ermöglicht es, einen zeitlichen Verlauf der Bewegungsbahn der Bearbeitungseinheit während des jeweiligen Bearbeitungsvorgangs fein vorzugeben. Dies kann in Form einer elektronischen Kurve geschehen. Nach erfolgter Bearbeitung kann auf diese Weise die Bearbeitungseinheit z. B. sehr schnell entgegen der Förderrichtung in eine Ausgangsposition zur Bearbeitung des nächsten Teiglings überführt werden.

Bei einer Ausführung der Bearbeitungseinrichtung mit einer Schneideinrichtung nach Anspruch 6 hat sich das Konzept der mitfahrenden Bearbei-tungseinheit als besonders vorteilhaft herausgestellt. Eine Schneid-Bearbeitungseinheit kann separat zur Stüpfel-Bearbeitungseinheit ausgeführt sein.

Ein Ausführungsbeispiel der Erfindung wird nachfolgend anhand der Zeichnung näher erläutert. In dieser zeigen:
- Fig. 1: eine Teigbearbeitungsanlage mit einer Bearbeitungseinrichtung in Form einer Stüpfeleinrichtung in einer Seitenansicht, wobei zum Teil interne Details lediglich schematisch dargestellt sind;
- Fig. 2 bis 9: in einer Sequenz Momentanpositionen der Bearbeitungseinrichtung, insbesondere Momentanpositionen der Antriebe zur Vorgabe einer Bewegungsbahn der Bearbeitungseinheit relativ zu einer Teiglingaufnahme während der Teigbearbeitung.

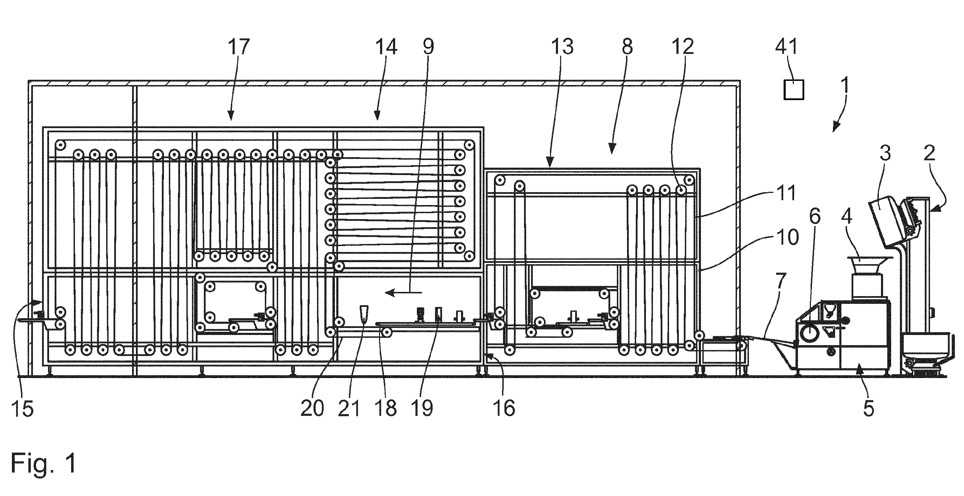

Der schematische Aufbau einer in Fig. 1 dargestellten Ausführungsform einer Teigbearbeitungsanlage 1 ist grundsätzlich aus der EP 1 600 058 A2 bekannt. Die Teigbearbeitungsanlage 1 hat einen Grundrahmen 1a und umfasst eine Kneteinrichtung 2 zum Kneten von Teig. Die Kneteinrichtung 2 weist einen anheb- und schwenkbaren Trog 3 auf, der in Fig. 1 sowohl in einer Knet- als auch in einer angehobenen und verschwenkten Abgabestellung dargestellt ist. In der Abgabestellung des Trogs 3 befindet sich unter diesem ein Zuführtrichter 4 einer Portionier- und Rundwirkeinrichtung 5. Die Portionier- und Rundwirkeinrichtung 5 umfasst eine Rundwirkstation 6. Diese ist durch ein mehrstrahliges Übergabeförderband 7 mit einer modular aufgebauten Gär- und Formvorrichtung 8 verbunden. Mit dem Abgabeende des Übergabeförderbandes 7 in Förderrichtung 9 steht eine Gehänge-Fördereinrichtung 10. Die Gehänge-Fördereinrichtung 10 umfasst eine Mehrzahl von nicht dargestellten Gehängen zur Aufnahme von Teig, insbesondere Teiglingen. Die Gehänge sind mit einer Förderkette 11 verbunden, die über eine Mehrzahl von Umlenkrollen 12 endlos umlaufend geführt ist. Beim Fördern läuft die Förderkette 11 in Teilmodulen 13, 14, 15 im Wesentlichen im Uhrzeigersinn um.

In dem Teilmodul 15 ist eine Stüpfelstation 16 vorgesehen. Das Teilmodul 15 bildet in der gezeigten Ausführungsvariante der Teigbearbeitungsanlage 1 einen Bestandteil einer Bestreuungs- und Nachgäreinrichtung 17. Die Teiglinge werden entlang der Förderrichtung 9 mittels eines Abschnitts eines angetriebenen Förderbands 18 transportiert, welches vorzugsweise mehrspurig ausgebildet ist. Das Förderband 18 ist ein Beispiel für eine Teig-Fördereinrichtung zum Fördern der Teiglinge in der Förderrichtung 9. Das Förderband 18 fördert die zu bearbeitenden Teiglinge in der Förderrichtung 9 mit einer vorgegebenen, konstanten Fördergeschwindigkeit. Die Teiglinge sind in Teiglingschalen 18a aufgenommen, die vom Förderband 18 mitgenommen werden und sich mit diesem mit der vorgegebenen, konstanten Fördergeschwindigkeit in der Förderrichtung 9 bewegen. Entlang des Förderbands 18 passieren die Teiglinge in der gezeigten Ausführungsvariante der Teigbearbeitungsanlage 1 in Förderrichtung 9 mehrere Bearbeitungsstationen, zu denen eine Stüpfelstation 19 gehört, die in der Fig. 1 sehr schematisch dargestellt ist.

Die Teigbearbeitungsanlage 1 ist zur Durchführung von mindestens fünfundsechzig Bearbeitungsvorgängen pro Minute ausgeführt und kann mehr als fünfundsechzig Bearbeitungsvorgänge pro Minute, mehr als siebzig Bearbeitungsvorgänge pro Minute und auch mehr als achtzig Bearbeitungsvorgänge pro Minute durchführen.

Je nach der Art der durch die Teigbearbeitungsanlage 1 geförderten Teiglinge kann eine oder mehrere der schematisch dargestellten Bearbeitungsstationen weggelassen oder durch eine vergleichbare Station ersetzt werden. In dem gezeigten Beispiel der Teigbearbeitungsanlage 1 gelangen die Teiglinge nach dem Förderbandabschnitt 18 auf einen Abschnitt eines weiteren angetriebenen Förderbands 20.

Während der Förderung auf dem Förderband 20 in Förderrichtung 9 passieren die Teiglinge eine erfindungsgemäße Bemehlungsvorrichtung 21, durch welche die Teiglinge selektiv mit Mehl bestreubar sind.

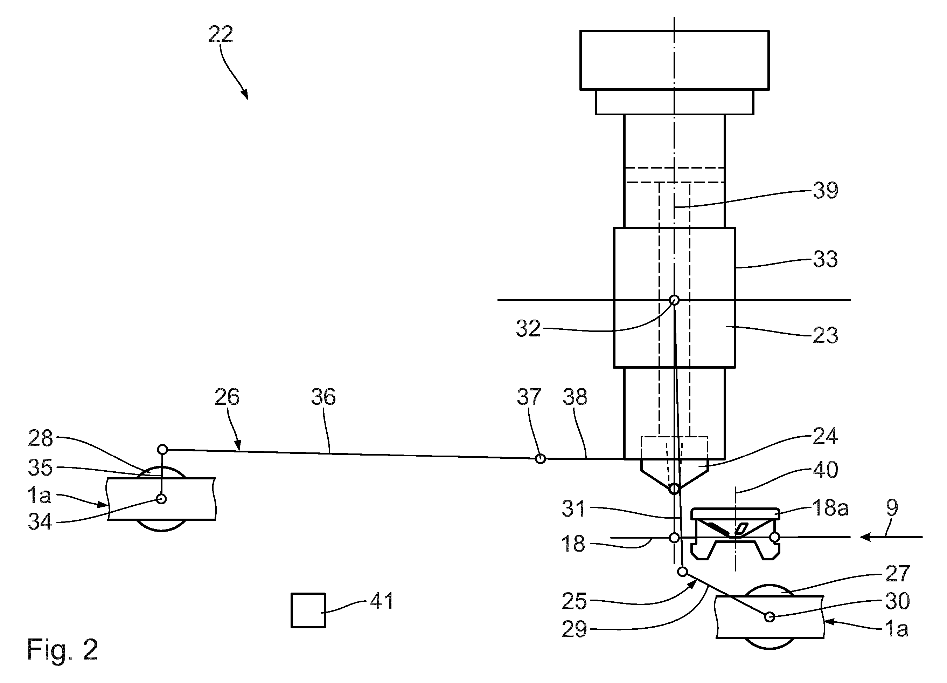

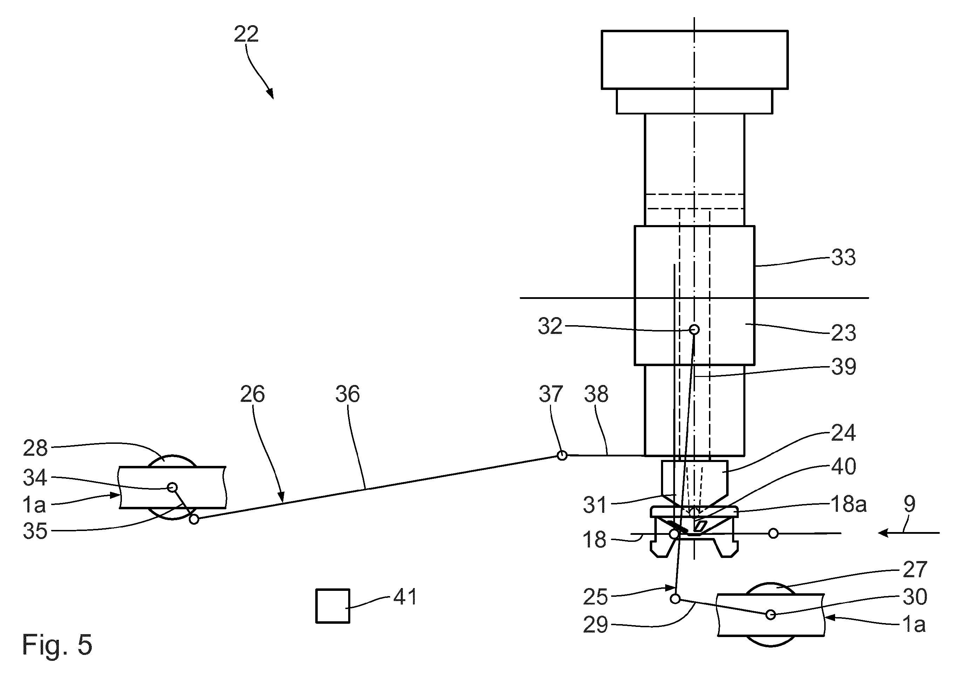

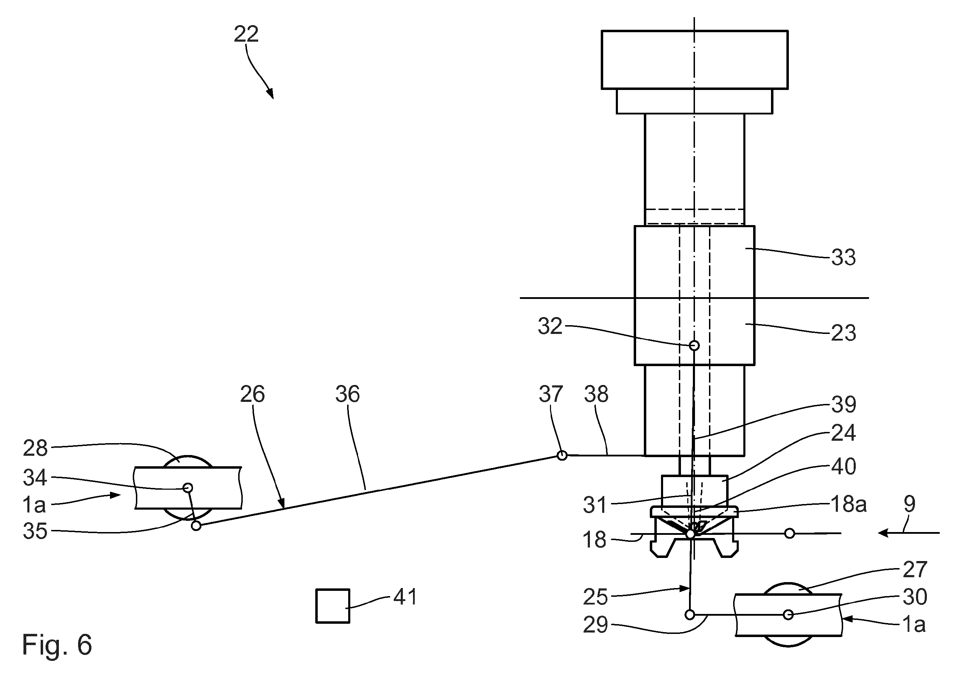

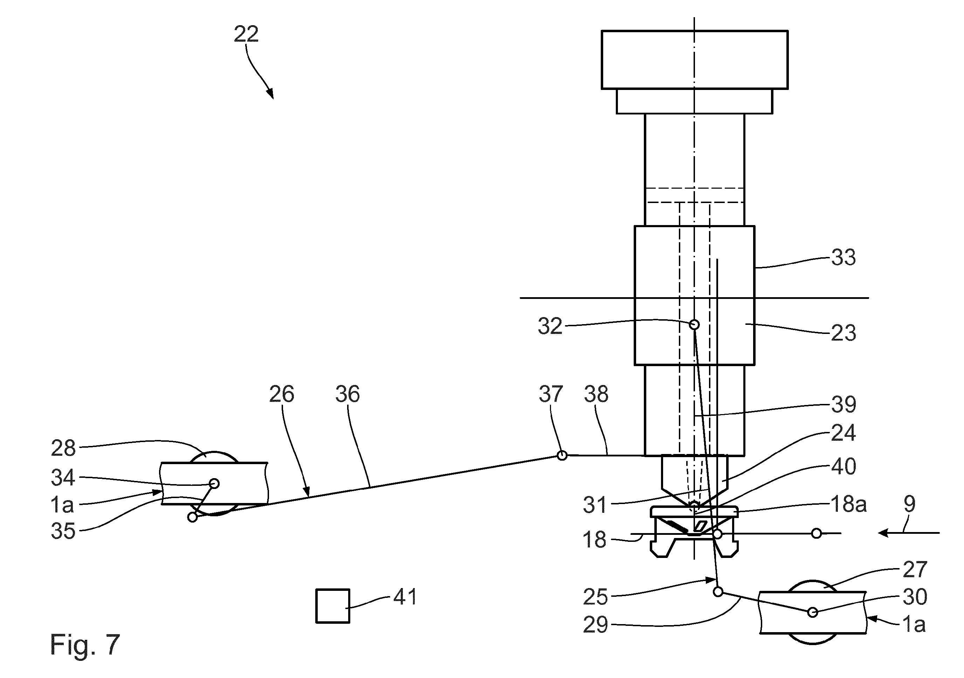

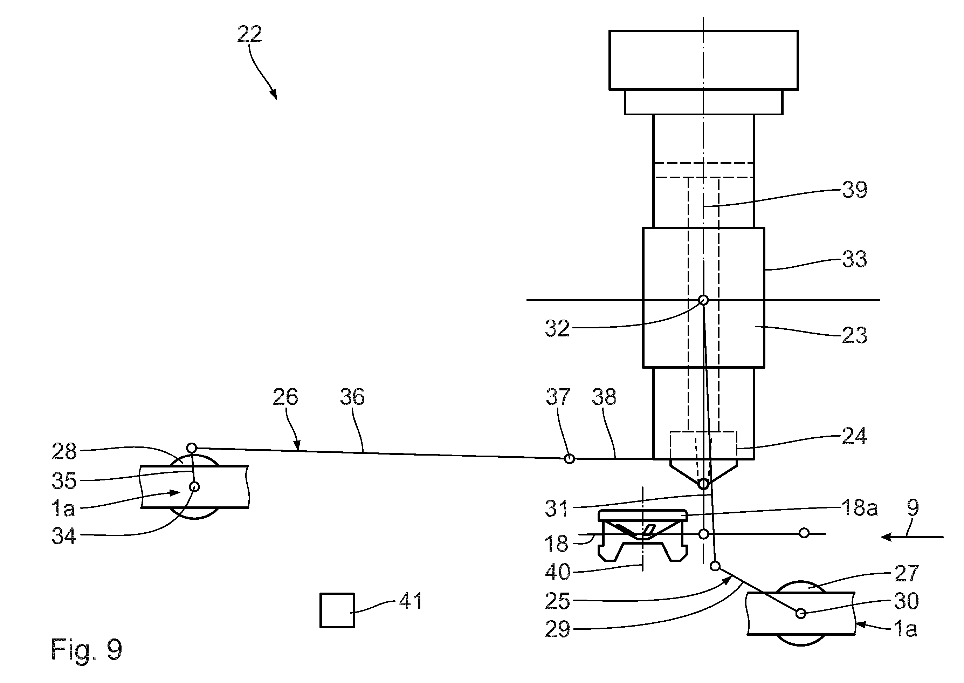

Die Fig. 2 bis 9 zeigen eine Sequenz von Momentanpositionen einer Stüpfeleinrichtung 22 der Stüpfelstation 19. Die Stüpfeleinrichtung 22 stellt ein Beispiel einer Bearbeitungseinrichtung der Teigbearbeitungsanlage 1 zur Bearbeitung der auf dem Förderband 18 geförderten Teiglinge mit einer Bearbeitungseinheit dar. Als Bearbeitungseinheit dient bei der Stüpfeleinrichtung 22 eine Stüpfeleinheit 23, die an ihrem unteren Ende ein Stüpfelwerkzeug 24 zum Stüpfeln des Teiglings, beispielsweise einen Kaiserstüpfler, aufweist.

Die Stüpfeleinheit 23 ist derart ausgeführt, dass sie während der Bearbeitung, also während des Stüpfelns, mit dem zu bearbeitenden Teigling relativ zum Grundrahmen 1a, der in der Fig. 2 durch zwei gebrochen dargestellte Rahmenleisten angedeutet ist, in der Förderrichtung 9 angetrieben verlagert wird.

Zur Vorgabe einer Bewegungsbahn der Stüpfeleinheit 23 dienen zwei Antriebe 25, 26 mit voneinander unabhängigen Antriebsmotoren 27, 28. Die Antriebsmotoren 27, 28 sind als Servomotoren ausgeführt. Der Antrieb 25 ist der eigentliche Stüpfelantrieb der Stüpfeleinrichtung 22 und sorgt für eine Vertikal-Bewegungskomponente der Stüpfeleinheit 23 relativ zur Teiglingschale 18a. Der weitere Antrieb 26 stellt einen Mitfahrantrieb dar, der die Stüpfeleinheit 23 während des Stüpfelns synchronisiert mit der Teiglingschale 18a mit einer Mitfahrgeschwindigkeit, die der Fördergeschwindigkeit des Förderbands 18 entspricht, in der Förderrichtung 9 antreibt.

Der Stüpfelantrieb 25 ist als Schwinge, also als Schwingantrieb, ausgeführt. Der Mitfahrantrieb 26 ist als Kurbeltrieb ausgeführt. Eine Amplitude des Schwingantriebs 25 ist einstellbar vorgebbar. Über die Schwingungsamplitude lässt sich eine Bearbeitungstiefe und insbesondere eine Stüpfeltiefe vorgeben. Über eine Ansteuerung des Kurbelantriebs 26 lässt sich eine Bearbeitungszeitdauer, insbesondere eine Stüpfelzeitdauer vorgeben. Die Bearbeitungstiefe einerseits und die Bearbeitungszeit andererseits können unabhängig voneinander eingestellt werden.

Eine Kurbel 29 des Stüpfelantriebs 25 ist drehfest mit einer Antriebswelle 30 des Antriebsmotors 27 verbunden. Die Kurbel 29 ist gelenkig mit einem Übertragungshebel 31 verbunden, der wiederum über ein Schwenkgelenk 32 mit einem Grundkörper 33 der Stüpfeleinheit 23 verbunden ist. Die Antriebswelle 30 verläuft parallel zu den Gelenkachsen der Anlenkungen zwischen den Hebeln 29 und 31 einerseits und zu einer Schwenkachse des Schwenkgelenks 32 andererseits.

Eine Antriebswelle 34 des Antriebsmotors 28 ist drehfest mit einer Kurbel 35 des Mitfahrantriebs 26 verbunden. Die Kurbel 35 ist gelenkig mit einem Mitfahr-Übertragungshebel 36 verbunden, der wiederum über ein Mitfahr-Schwenkgelenk 37 mit einem fest am Grundkörper 33 montierten Ausleger 38 der Stüpfeleinheit 23 verbunden ist. Die Antriebswelle 34 verläuft parallel zu den Gelenkachsen der Anlenkungen zwischen den Hebeln 35, 36 einerseits und zu einer Schwenkachse des Schwenkgelenks 37 andererseits.

Die Momentansequenzen der Fig. 2 bis 9 machen die Bewegungsbahn der Stüpfeleinheit 23 relativ zur Teiglingschale 18a beim Stüpfelvorgang deutlich.

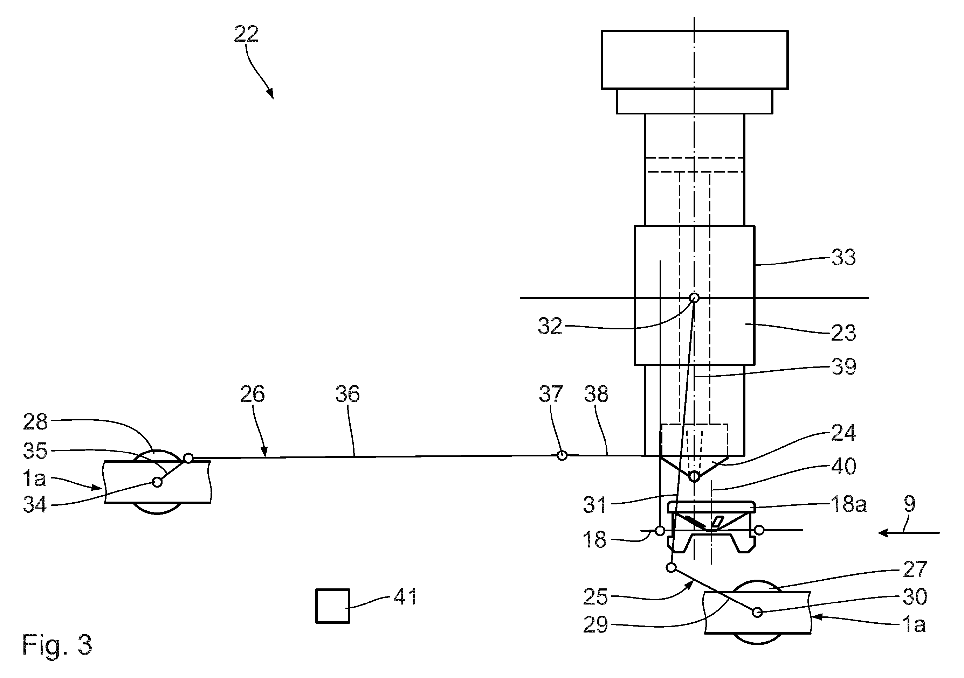

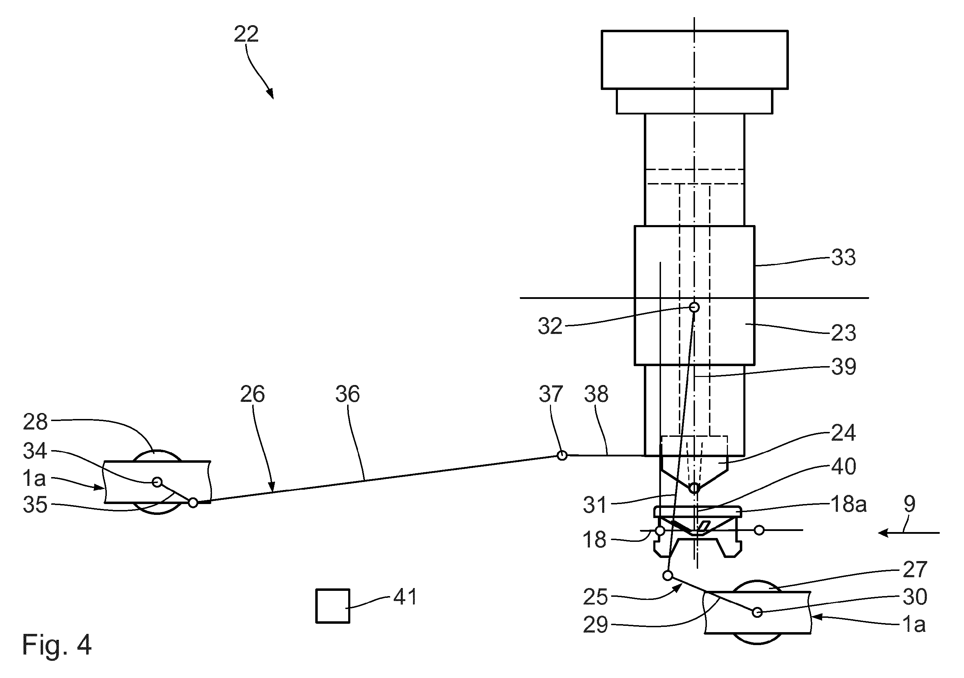

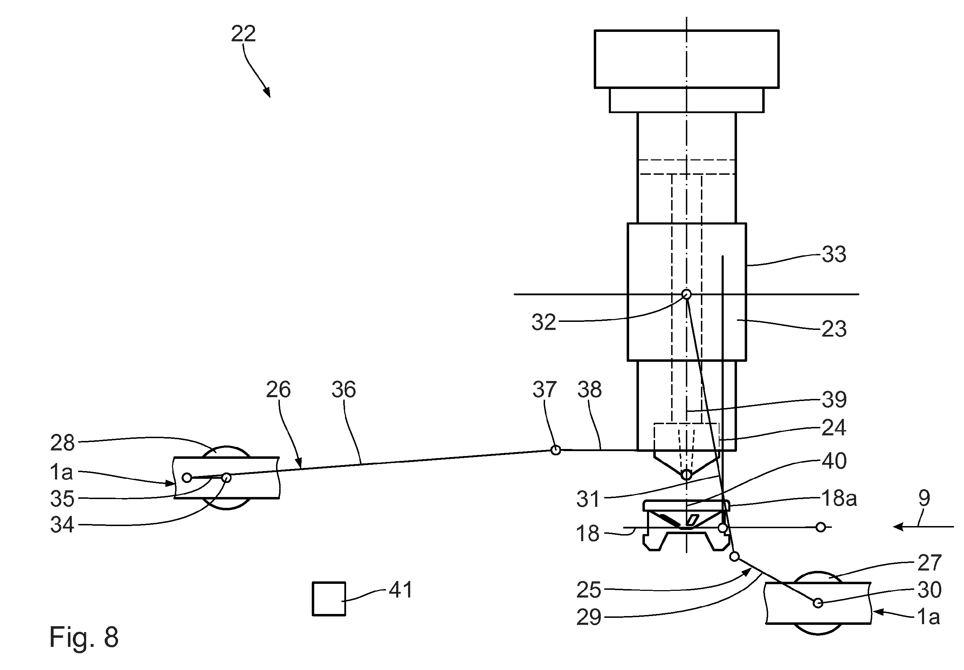

Die Fig. 2 und 3 zeigen einen Vorbereitungs-Zeitabschnitt des Stüpfelns, bei dem sich das Stüpfelwerkzeug 24 in vertikaler Richtung der Teiglingschale 18a nähert. Ab der Momentanposition nach Fig. 4 fluchtet eine zentrale Längsachse 39 des Stüpfelwerkzeugs 24 mit einer zentralen Längsachse 40 der Teiglingschale 18a. Zwischen den Momentanpositionen nach der Fig. 4 und der Fig. 8 findet das Stüpfeln statt. Während dieses Zeitabschnitts der Bearbeitung fährt die Stüpfeleinheit 23 mit der Teiglingschale 18a in der Förderrichtung 9 mit der vorgegebenen Fördergeschwindigkeit des Förderbands 18 mit. Diese Mitfahrbewegung mit der Fördergeschwindigkeit des Förderbandes 18 wird über den Mitfahrantrieb 26 vorgegeben.

Sobald nach dem Stüpfeln, angetrieben über den Stüpfelantrieb 25, das Stüpfelwerkzeug 24 einen ausreichend großen Vertikalabstand zur Teiglingschale 18a und damit zum gestüpfelten Teigling hat, wird das Stüpfelwerkzeug nicht weiter mit der Teiglingschale 18a mitgefahren, sondern sehr schnell entgegen der Förderrichtung 9 hin zur Ausgangsposition zu Beginn des Stüpfelns in Zusammenwirkung mit der nächsten Teiglingschale 18a verbracht. Diese Bewegung entgegen der Förderrichtung 9 geschieht mit deutlich höherer Geschwindigkeit als der Absolutbetrag der Fördergeschwindigkeit des Förderbandes 18. Die Bearbeitungssequenz nach den Fig. 2 bis 9 wiederholt sich dann für die Bearbeitung des Teiglings in der nächsten Teiglingschale 18a.

Während einer gesamten Periode der Bearbeitungssequenz der Stüpfeleinrichtung 22 kann während eines vergleichsweise großen Zeitraums ein Mitfahren des Stüpfelwerkzeugs mit der Teiglingschale 18a und damit ein entsprechend langer Stüpfelzeitraum, während dem das Stüpfelwerkzeug 24 mit dem Teigling in der Teiglingschale 18a in Kontakt steht, gewährleistet sein. Dieser Stüpfelzeitraum ist aufgrund der mitfahrenden Stüpfeleinheit 23 also deutlich länger als bei einer konventionellen Stüpfeleinrichtung 22.

Um die Bewegungsbahn nach den Fig. 2 bis 9 bereitzustellen und insbesondere um die verschiedenen Geschwindigkeiten der Stüpfeleinheit 23 einerseits in der Förderrichtung 9 und andererseits entgegen der Förderrichtung 9 zu erzeugen, variiert eine Umdrehungsgeschwindigkeit der Antriebswelle 34 des Mitfahr-Antriebsmotors 28.

Die Antriebswelle 30 kehrt während der Bearbeitung ihre Drehrichtung um, je nachdem, ob das Stüpfelwerkzeug 24 in Richtung auf die Teiglingschale 18a abgesenkt oder in Gegenrichtung von dieser abgehoben wird.

Über die Variation der Umdrehungsgeschwindigkeiten der beiden Antriebsmotoren 27, 28 wird die Bewegungsbahn des Stüpfelwerkzeugs 24 relativ zur Teiglingschale 18a in Form einer elektronischen Kurve herbeigeführt.

Anstelle oder alternativ zu einer entsprechend der vorstehenden Beschreibung mitfahrenden Stüpfeleinrichtung kann mit entsprechenden Antrieben auch beispielsweise eine mitfahrende Schneideinrichtung als weitere mögliche Bearbeitungseinrichtung realisiert sein. Der Mitfahrantrieb einer solchen Schneideinrichtung kann genauso ausgeführt sein wie der Mitfahrantrieb 26. Ein Schneidantrieb einer solchen Schneideinrichtung kann entsprechend dem Stüpfelantrieb der Stüpfeleinrichtung 22 ausgeführt sein.

Ein Antrieb der Förderbänder 18 und 20 sowie der Stüpfelantrieb 25 und der Mitfahrantrieb 26 werden über eine gemeinsame Steuereinrichtung 41 der Teigbearbeitungsanlage 1 gesteuert, die in der Zeichnung schematisch dargestellt ist. Über die Steuereinrichtung 41 können Details einer Synchronisierung der jeweiligen Bearbeitungseinheit zur Teiglingsförderung vorgegeben werden, insbesondere die Anzahl der Bearbeitungsvorgänge pro Minute oder auch ein Mitfahrzeitraum, während der die Bearbeitungseinheit mit dem Teigling in der Fördergeschwindigkeit synchronisiert mitfährt.

## Patentansprüche

1. Teigbearbeitungsanlage (1),
- mit einem Grundrahmen (1a),
- mit mindestens einer angetriebenen Teig-Fördereinrichtung (18) zum Fördern zu bearbeitender Teiglinge in einer Förderrichtung (9),
- mit mindestens einer eine Stüpfeleinrichtung umfassende Bearbeitungseinrichtung (22) zur Bearbeitung der auf der Teig-Fördereinrichtung (18) geförderten Teiglinge mit einer Bearbeitungseinheit (23),
- wobei die Bearbeitungseinheit (23) derart ausgeführt ist, dass sie während der Bearbeitung mit dem zu bearbeitenden Teigling relativ zum Grundrahmen (1a) in der Förderrichtung (9) angetrieben verlagert wird.

2. Teigbearbeitungsanlage nach Anspruch 1, **gekennzeichnet durch** eine Ausführung zur Durchführung von mehr als fünfundsechzig Bearbeitungsvorgängen pro Minute.

3. Teigbearbeitungsanlage nach Anspruch 1 oder 2, **gekennzeichnet durch** zwei Antriebe (25, 26) mit voneinander unabhängigen Antriebsmotoren (27, 28) zur Vorgabe einer Bewegungsbahn der Bearbeitungseinheit (23).

4. Teigbearbeitungsanlage nach Anspruch 3, **dadurch gekennzeichnet, dass** mindestens einer der Antriebe (25, 26) als Kurbeltrieb ausgeführt ist.

5. Teigbearbeitungsanlage nach Anspruch 4, **gekennzeichnet durch** eine Ausführung eines Kurbel-Antriebsmotors (27, 28) derart, dass eine Umdrehungsgeschwindigkeit des Kurbel-Antriebsmotors (27, 28) während eines Bearbeitungsvorgangs variiert.

6. Teigbearbeitungsanlage nach einem der Ansprüche 1 bis 5, **dadurch gekennzeichnet, dass** die Bearbeitungseinrichtung eine Schneideinrichtung umfasst.
